# EUROPÄISCHE PATENTSCHRIFT

(11) **EP 2 678 195 B1**
(45) Veröffentlichungstag und Bekanntmachung des Hinweises auf die Patenterteilung: **19.06.2019**
(21) Anmeldenummer: 12700167.5
(22) Anmeldetag: 09.01.2012
(51) Int. Cl.: B60S 1/38

(54) **WISCHBLATT**
WIPER BLADE
BALAI D'ESSUIE-GLACE

(30) Priorität: 22.02.2011 DE 202011003000 U
(43) Veröffentlichungstag der Anmeldung: 01.01.2014
(73) Patentinhaber: Robert Bosch GmbH, 70442 Stuttgart (DE)
(72) Erfinder: DE BLOCK, Peter, B-3545 Halen (BE)
(86) Internationale Anmeldenummer: PCT/EP2012/050227
(87) Internationale Veröffentlichungsnummer: WO 2012/113586

(56) Entgegenhaltungen:
- EP-A1- 2 103 490
- DE-U1-202004 012 109
- US-A1- 2009 064 440
- US-A1- 2010 139 026

## Beschreibung

### Stand der Technik

Die Erfindung geht von einem Wischblatt nach dem Oberbegriff des Anspruchs 1 aus.

Aus der DE 10 2004 051 466 A1 ist ein gattungsgemäßes Wischblatt bekannt. Dieses besitzt eine Wischleiste aus einem elastomeren Werkstoff, die mit einer Wischlippe an einer Fahrzeugscheibe anliegt. Damit die Wischleiste der Krümmung der Fahrzeugscheibe folgen kann, sind in seitlichen Längsnuten der Wischleiste zwei bandförmige, parallel nebeneinander verlaufende, zu einer Wischlippe konkav vorgebogene Federschienen als Tragelemente eingesetzt, die seitlich aus den Längsnuten vorstehen und an ihren Enden durch Endkappen zusammengehalten und zueinander fixiert sind. Die Endkappen weisen an ihren Längsseiten jeweils zwei parallel zur Längsrichtung der Wischleiste verlaufende Führungsprofile mit Führungsflächen und Stegen auf. Die Führungsflächen führen die Endkappen an den aus den Längsnuten vorstehenden Teilen der Federschienen.

Jede Endkappe weist mindestens eine angeformte, im Wesentlichen parallel zur oberen Seite der Kopfleiste verlaufende Federzunge auf. An ihrer zur Kopfleiste weisenden Seite besitzt die Federzunge eine Sperrnase. Diese ist keilförmig gestaltet und nimmt zum Ende des Wischblatts hin in ihrer Höhe zu, sodass die Montage der Endkappe erleichtert wird. Bei einer Schwenkbewegung der Federzunge richtet sich die dem Ende zugewandte Flanke der keilförmigen Sperrnase vermehrt auf, sodass die Endkappe gegen ein Abziehen von der Wischleiste gesichert ist. Damit sich die Sperrnase nicht unbeabsichtigt lösen kann, ist ein Sperrriegel vorgesehen, der in einer Aussparung der Endkappe geführt ist und in der der Verriegelungsposition die Federzunge gegen die Kopfleiste der Wischleiste drückt und blockiert.

Zusätzlich zu der Sperrnase kann die Federzunge auf der den Federschienen zugewandten Seite zwei seitlich von der Sperrnase und symmetrisch dazu angeordnete Rastzapfen aufweisen, die in montiertem Zustand in Rastlöcher eingreifen, die im Endbereich der Federschienen angeordnet sind und als zusätzliche Führung dienen. Während die Rastzapfen zylindrisch ausgeführt sind, sind die Rastlöcher als Langlöcher ausgebildet, sodass die Federschienen in Längsrichtung ein begrenztes Spiel haben. Ferner bestimmen die Rastzapfen den Abstand der Federschienen zueinander. Dadurch besitzt der Steg der Wischleiste zwischen den Federschienen einen ausreichenden Freiraum für eine gute Funktionalität.

Weitere Wischblätter mit Endkappen sind aus der US 2010/139026 A1 sowie aus der EP 2 103 490 A1 bekannt.

### Offenbarung der Erfindung

Die vorliegende Erfindung betrifft ein Wischblatt gemäß Anspruch 1.

Nach der Erfindung sind die Rastnasen an den von der Wischlippe entfernteren Seitenwangen des Führungsprofils vorgesehen sind, während die anderen Seitenwangen des Führungsprofils die Rastnasen zur Stirnwand der Endkappe überdecken und vor dieser enden. Da die Seitenwangen, die der Wischlippe am nächsten liegen, nicht an der Stirnwand angeformt sind, sind Sie in einem bedeutenden Maße nachgiebig, sodass beide Seitenwangen eines Führungsprofils bei der Montage nachgeben, wodurch sich insgesamt ein großer Federweg ergibt, ohne dass das Material überbeansprucht wird. Trotzdem können die Seitenwangen der Führungsprofile genügend steif ausgebildet werden, sodass sich eine Sicherung der Rastnasen in der Rastposition durch einen Riegel erübrigt.

Die Rastnasen sind an den von der Wischlippe entfernteren Seitenwangen der Führungsprofile vorgesehen.

Gemäß der Erfindung wird vorgeschlagen, dass bei einer Anordnung der Rastnase an der der Wischlippe entfernteren Seitenwange die andere Seitenwange zum Ende der zugeordneten Federschiene vor der größten Erhebung der Rastnase endet, sodass eine Lücke gebildet wird, durch die der Rastzapfen von außen betätigt werden kann. Es besteht jedoch auch die Möglichkeit, dass die der Wischlippen nächstgelegene Seitenwange in montierter Position den Rastzapfen zur Wischlippe hin abdeckt, sodass er und die Öffnung in der Federschiene vor Verschmutzungen geschützt sind und Strömungsgeräusche in diesem Bereich reduziert werden.

Erfindungsgemäss nimmt die Höhe der Rastnase in Montagerichtung ab. Sie bildet so zwecks einer leichten Montage eine Anlaufschräge. In der entgegengesetzten Richtung fällt die Rastnase steil ab, wodurch die Sperrwirkung verstärkt ist. Gemäß einer weiteren Ausgestaltung wird vorgeschlagen, dass die Aussparungen in den Federschienen symmetrisch zur Längsmittelebene der jeweiligen Federschiene gestaltet sind. Dadurch ist gewährleistet, dass die Federschienen auf beiden Seiten des Wischblatts gleich sind und die Teilevielfalt klein gehalten wird.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen gemäß dem Wortlaut der Ansprüche zusammenfassen.

Es zeigen:
Fig. 1 eine Seitenansicht eines Wischblatts,
Fig. 2 einen Schnitt entsprechend der Linie II-II in Fig. 1,
Fig. 3 einen Schnitt entsprechend der Linie III-III Fig. 1,
Fig. 4 eine Draufsicht auf ein Ende einer Federschiene,
Fig. 5. eine Ansicht eines Endes eines Wischblatts nach Fig. 1 von unten,
Figur 6 einen Längsschnitt durch eine Endkappe,
Fig. 7 eine Variante zu Fig. 5,
Fig. 8 und Fig. 9 Varianten zu Fig. 6.

Ein Wischblatt 10 in Flachbalkenbauweise besitzt eine Wischleiste 14, deren Wischlippe 16 über einen Kippsteg 18 an einer Kopfleiste 22 angebunden ist. Zwischen der Wischlippe 16 und der Kopfleiste 22 sind seitlich Stützleisten 20 angeordnet. Ferner sind in der Kopfleiste 22 seitliche Längsnuten 24 vorgesehen, die zwischen sich einen Steg 25 bilden. Der von der Wischlippe 16 abgewandte Teil der Kopfleiste 22 ist als Rückenleiste 26 bezeichnet.

In den Längsnuten 24 sind auf jeder Seite des Wischblatts 10 eine Federschiene 28 eingesetzt, die seitlich ein Stück weit vorsteht. Auf dem vorstehenden Teil der Federscheine 28 ist in Längsrichtung zu beiden Seiten eines Anschlusselements 32 für die gelenkige Verbindung mit einem nicht dargestellten Wischarm ein Spoiler 34 geführt. Der Spoiler 34 ist optional und kann in gewissen Anwendungsfällen entfallen. An den Enden des Wischblatts 10 sind Endkappen 36 vorgesehen. Diese besitzen an ihren Längsseiten Führungsprofile 44, mit denen sie auf den aus den Nuten 24 vorstehenden Teilen der Federschienen 28 geführt sind. Dabei liegen die bandförmigen Federschienen 28 zwischen den Seitenwangen 46 und 48 der Führungsprofile 44. Die Seitenwangen 46 auf der der Wischlippe 16 abgewandte Seite können zu einer Zwischenwand verbunden sein, die eine Aussparung 42 für die Rückenleiste 26 der Wischleiste 14 bildet. Wenn das Wischblatt 10 einen Spoiler 34 besitzt, weisen die Endkappen 36 ebenfalls Strömungsprofile 38 auf und verfügen über Aussparungen 40 zum Anschluss an den Spoiler 34.

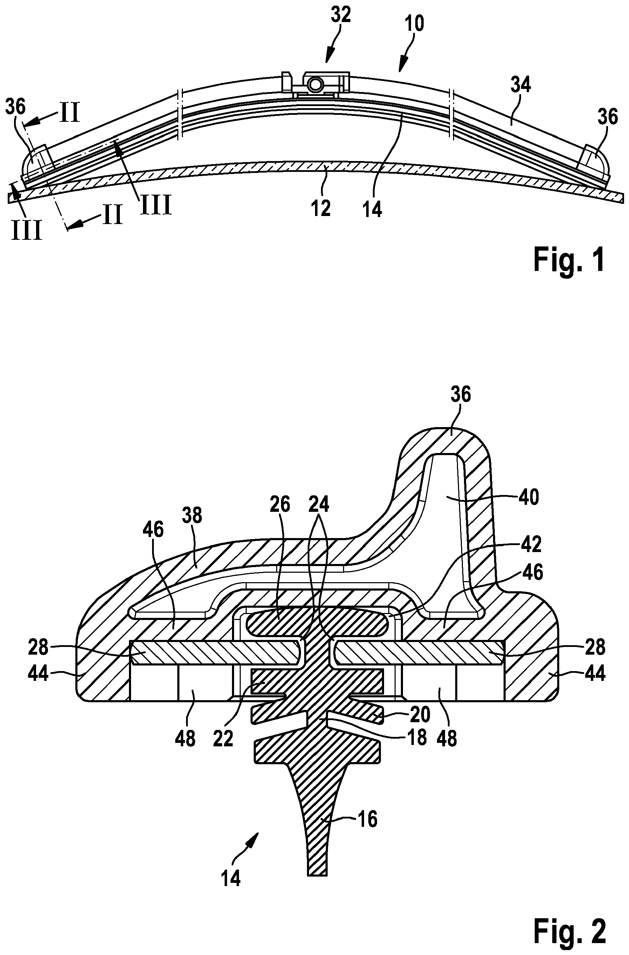

Damit das Wischblatt 10 einer gekrümmten Fahrzeugscheibe 12 folgen kann, sind die Federschienen 28 konkav zur Wischlippe 16 hin vorgebogen, sodass im unbelasteten Zustand (Fig. 1) nur die Enden des Wischblatts 10 die Fahrzeugscheibe 12 berühren.

Damit man auf beiden Seiten des Wischblatts 10 gleiche Federschienen verwenden kann, ist es vorteilhaft, dass die Aussparungen 30 der Federschienen 28 symmetrisch zu einer Längsmittelebene 64 der zugeordneten Federschiene gestaltet sind. Dabei kann es zweckmäßig sein, dass der Teil der Federschiene 28, der in die Längsnut 24 der Wischleiste 14 eintaucht schmaler ist, als der vorstehende Teil.

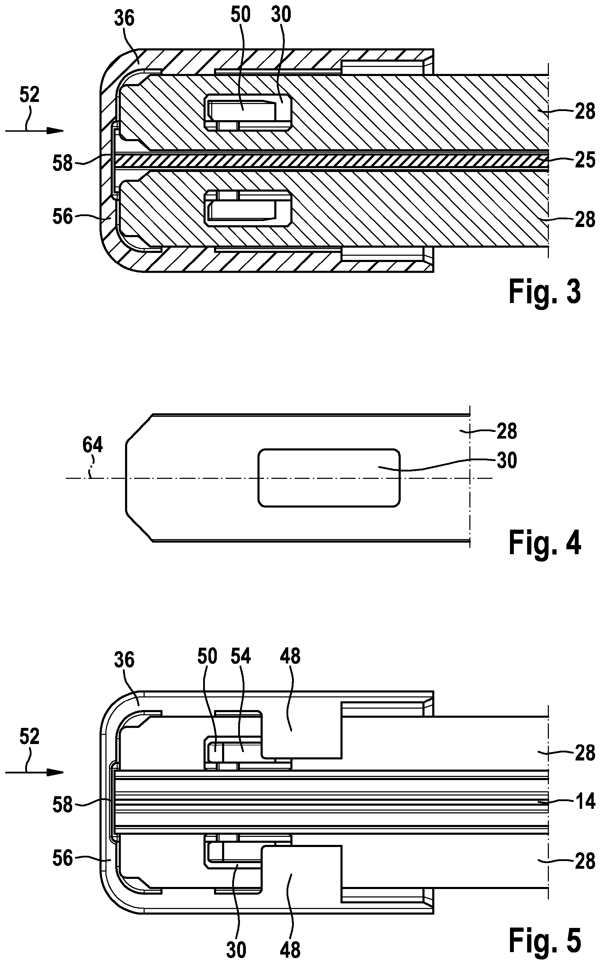

Wie aus Fig. 3 und 5 zu ersehen ist, werden die Federschienen 28 zwischen den Rastnasen 50, die in die Aussparungen 30 der Federschienen eingreifen und der Innenseite der endseitigen Stirnwand 56 der Endkappe 36 in Längsrichtung fixiert. Damit sich eindeutige Anlageflächen zwischen den Stirnseiten der Federschienen 28 und der Innenseite der Stirnwand 56 der Endkappe 36 ergeben, sind die Ecken der Federschienen 28 gebrochen, wodurch ein ausreichender Freiraum in den Ecken gebildet wird. Ferner ist an der Innenseite der Stirnwand 56 eine Vertiefung 58 für die Kopfleiste 22 der Wischleiste 14 vorgesehen.

Bei der Montage der Endkappe 36 wird diese in Montagerichtung 52 mit den Führungsprofilen 44 auf die Federschienen 28 geschoben, wobei sich die Führungsprofile 44 auf Grund der elastisch nachgiebigen Gestaltung der Seitenwange 46 aufweiten, bis die Rastnasen 50, 62 in die Aussparungen 30 der Federschienen 28 einrasten können. Im eingerasteten Zustand der Rastnase 50 befindet sich das der Stirnwand 56 zugewandte Ende der Seitenwange 48, die der Wischlippe 16 am nächsten liegt im Bereich der Anlaufschrägen 54, sodass die Rastnase 56 nur teilweise überdeckt ist und von dieser Seite durch die Lücke zwischen der Seitenwange 48 und der Stirnwand 56 betätigt werden kann.

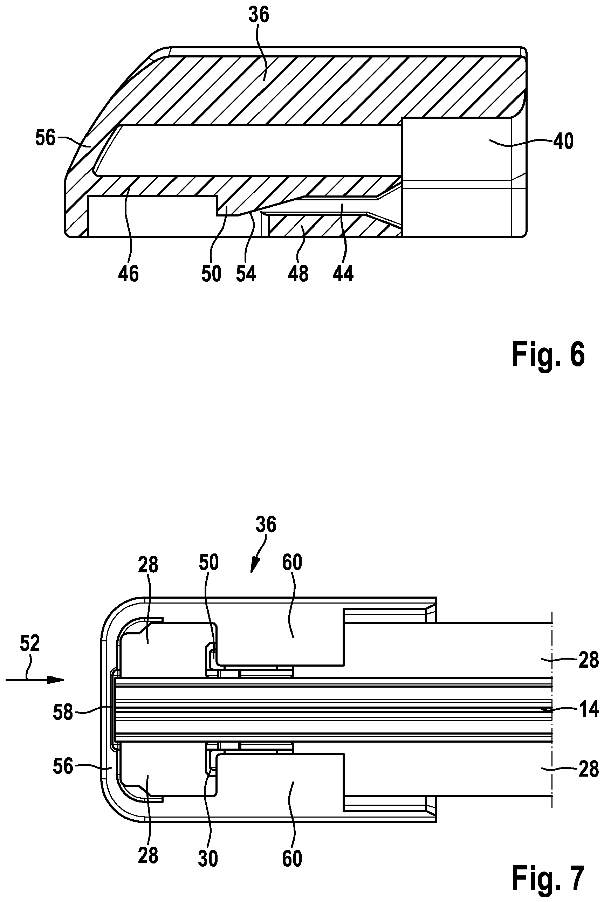

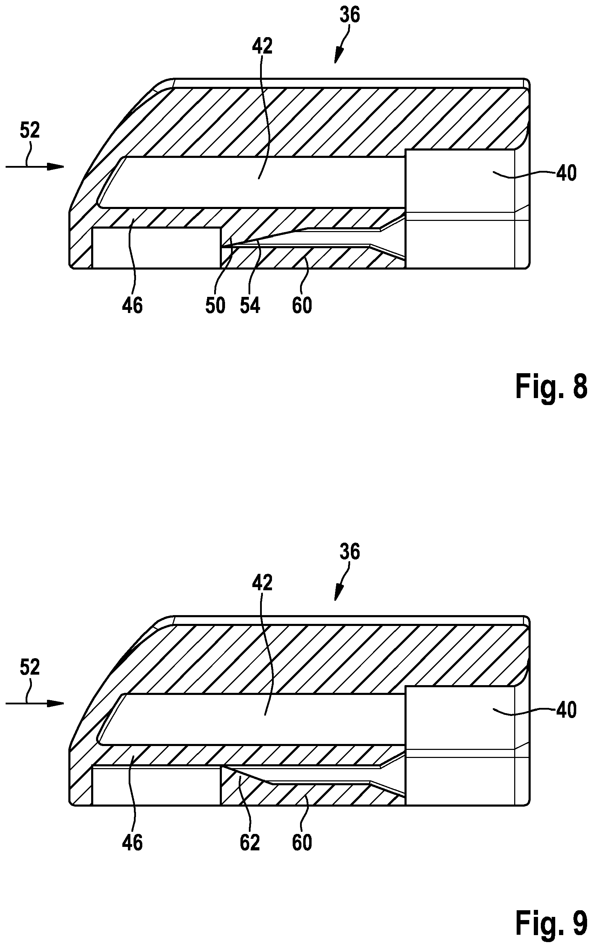

Bei der Ausführung nach Fig. 7 sind die der Wischlippe 16 nächstgelegenen Seitenwangen 60 der Führungsprofile 44 länger ausgeführt, sodass sie in der eingerasteten Position die Rastnasen 56, 62 zur Wischlippe 16 hin überdecken, jedoch vor der Stirnwand 56 enden. Somit sind sie Rastnasen 56, 62 und die Aussparungen 30 gegen Verschmutzungen geschützt. Fig. 8 zeigt einen entsprechenden Längsschnitt durch eine Endkappe 36 in der Ausführung nach Fig. 7.

Die Ausführung nach Fig. 9 unterscheidet sich von den vorher beschriebenen Ausführungen insbesondere dadurch, dass die Rastnase 62 an der unteren Seitenwange 60 des Führungsprofils 44 angeformt ist und von der der Wischlippe 16 zugewandten Seite in die Aussparung 30 der Federschiene 28 einrastet.

## Patentansprüche

1. Wischblatt (10) in Flachbalkenbauweise mit einer gummielastischen Wischleiste (14), in deren seitlichen Längsnuten (24) zwei bandförmige, parallel neben einander verlaufende, zu einer Wischlippe (16) konkav vorgebogene Federschienen (28) als Tragelemente eingesetzt sind, die seitlich aus den Längsnuten (24) vorstehen und an ihren Enden durch Endkappen (36) zusammengehalten und zueinander fixiert sind, die an ihren Längsseiten im Querschnitt u-förmige Führungsprofile (44) besitzen, deren Seitenwangen (46, 48, 60) auf den aus den Längsnuten (24) vorstehenden Teilen der zugeordneten Federschiene (28) geführt sind, wobei eine der Seitenwangen (46, 48, 60) jedes Führungsprofils (44) mindestens teilweise elastisch nachgiebig ausgebildet ist und eine Rastnase (50, 62) aufweist, die in eine Aussparung (30) der zugeordneten Federschiene (28) einrastet und diese in Montagerichtung (52) fixiert, wobei die Rastnasen (50) an den von der Wischlippe (16) entfernteren Seitenwangen (46) des Führungsprofils (44) vorgesehen sind, **dadurch gekennzeichnet, dass** die anderen Seitenwangen (60) des Führungsprofils (44) die Rastnasen (50) zur Stirnwand (56) der Endkappe (36) überdecken und vor dieser enden, so daß die Rastnasen (50) nur teilweise überdeckt sind, wobei die Höhe der Rastnase (50, 62) in Montagerichtung (52) abnimmt und somit eine Anlaufschräge (54) bildet, während die Rastnase (50, 62) in der entgegengesetzten Richtung steil abfällt.

2. Wischblatt (10) nach Anspruch 1, **dadurch gekennzeichnet, dass** die der Wischlippe (16) am nächsten liegenden Seitenwangen (48) des Führungsprofils (44) an ihren der Stirnwand (56) der Endkappe (36) zugewandten Enden vor der größten Erhebung der Rastnasen (50) enden, sodass die Rastnasen (50) zumindest teilweise diese Seitenwangen (48) queren können.

3. Wischblatt (10) nach einem der vorhergehenden Ansprüche, **dadurch gekennzeichnet, dass** Aussparungen (30) in den Federschienen (28) symmetrisch zur Längsmittelebene (64) der jeweiligen Federschienen (28) gestaltet sind.

## Claims

1. Wiper blade (10) of flat bar design with a rubber-elastic wiper strip (14), into the lateral longitudinal grooves (24) of which two band-shaped spring rails (28) running parallel next to each other and prebent concavely to form a wiper lip (16) are inserted as supporting elements which protrude laterally out of the longitudinal grooves (24) and are held together and fixed with respect to each other at their ends by end caps (36) which, on their longitudinal sides, have cross-sectionally U-shaped guide profiles (44), the side members (46, 48, 60) of which are guided on those parts of the associated spring rail (28) that protrude out of the longitudinal grooves (24), wherein one of the side members (46, 48, 60) of each guide profile (44) is of at least partially elastically flexible design and has a latching lug (50, 62) which latches in a recess (30) of the assigned spring rail (28) and fixes the latter in the installation direction (52), wherein the latching lugs (50) are provided on those side members (46) of the guide profile (44) that are further away from the wiper lip (16), **characterized in that** the other side members (60) of the guide profile (44) cover the latching lugs (50) towards the end wall (56) of the end cap (36) and end before said end wall, and therefore the latching lugs (50) are only partially covered, wherein the height of the latching lug (50, 62) decreases in the installation direction (52) and therefore forms a run-on slope (54) while the latching lug (50, 62) steeply drops in the opposite direction.

2. Wiper blade (10) according to Claim 1, **characterized in that** those side members (48) of the guide profile (44) that are located closest to the wiper lip (16) end at their ends facing the end wall (56) of the end cap (36) before the greatest elevation of the latching lugs (50), and therefore the latching lugs (50) can at least partially cross said side members (48).

3. Wiper blade (10) according to either of the preceding claims, **characterized in that** recesses (30) in the spring rails (28) are formed symmetrically with respect to the longitudinal centre plane (64) of the respective spring rails (28) .

## Revendications

1. Balai d'essuie-glace (10) de construction en forme de poutre plate comprenant une raclette de balai d'essuie-glace (14) ayant l'élasticité du caoutchouc, dans les rainures longitudinales latérales (24) de laquelle sont insérés, en tant qu'éléments de support, deux rails élastiques (28) en forme de bande s'étendant parallèlement l'un à côté de l'autre, précintrés sous forme concave pour former une lèvre de balai d'essuie-glace (16), qui font saillie latéralement hors des rainures longitudinales (24) et qui sont retenus et fixé l'un à l'autre au niveau de leurs extrémités par des embouts (36) qui possèdent au niveau de leurs côtés longitudinaux des profils de guidage (44) de section transversale en forme de U dont les joues latérales (46, 48, 60) sont guidées sur les parties saillant hors des rainures longitudinales (24) des rails élastiques associés (28), l'une des joues latérales (46, 48, 60) de chaque profil de guidage (44) étant réalisée au moins en partie sous forme élastiquement flexible et présentant un ergot d'encliquetage (50, 62) qui s'encliquète dans un évidement (30) du rail élastique associé (28) et qui fixe celui-ci dans la direction de montage (52), les ergots d'encliquetage (50) étant prévus au niveau des joues latérales (46), éloignées de la lèvre de balai d'essuie-glace (16), du profil de guidage (44), **caractérisé en ce que** les autres joues latérales (60) du profil de guidage (44) recouvrent les ergots d'encliquetage (50) vers la paroi frontale (56) de l'embout (36) et se terminent avant ce dernier de telle sorte que les ergots d'encliquetage (50) ne soient que partiellement recouverts, la hauteur de l'ergot d'encliquetage (50, 62) diminuant dans la direction de montage (52) et formant ainsi un biseau de montée (54) tandis que l'ergot d'encliquetage (50, 62) diminue fortement dans la direction opposée.

2. Balai d'essuie-glace (10) selon la revendication 1, **caractérisé en ce que** les joues latérales (48) du profil de guidage (44) situées le plus près de la lèvre de balai d'essuie-glace (16) se terminent au niveau de leurs extrémités tournées vers la paroi frontale (56) de l'embout (36) avant le plus grand rehaussement des ergots d'encliquetage (50), de telle sorte que les ergots d'encliquetage (50) puissent au moins en partie traverser ces joues latérales (48).

3. Balai d'essuie-glace (10) selon l'une quelconque des revendications précédentes, **caractérisé en ce que** des évidements (30) dans les rails élastiques (28) sont réalisés symétriquement par rapport au plan médian longitudinal (64) des rails élastiques respectifs (28).
